# EUROPEAN PATENT SPECIFICATION

(11) **EP 2 546 956 B1**
(45) Date of publication and mention of the grant of the patent: **20.01.2021**
(21) Application number: 11753668.0
(22) Date of filing: 14.03.2011
(51) Int. Cl.: H02J 50/10, H02J 50/80, H02J 7/02, H02J 50/40, H02J 7/00

(54) **METHOD FOR WIRELESS CHARGING OF A MOBILE TERMINAL AND MOBILE TERMINAL FOR SAME**
VERFAHREN ZUM DRAHTLOSEN AUFLADEN EINES MOBILEN ENDGERÄTES UND MOBILES ENDGERÄT DAFÜR
PROCÉDÉ DE CHARGEMENT SANS FIL DE TERMINAL MOBILE ET TERMINAL MOBILE POUR CELUI-CI

(30) Priority: 12.03.2010 KR 20100022534
(43) Date of publication of application: 16.01.2013
(73) Proprietor: Samsung Electronics Co., Ltd., Gyeonggi-do 443-742 (KR)
(72) Inventor: JUNG, Hee-won, Suwon-si Gyeonggi-do 443-470 (KR); PARK, Joon-ho, Seongnam-si Gyeonggi-do 463-867 (KR); WON, Eun-tae, Seoul 157-015 (KR); KOH, Jun-ho, Suwon-si Gyeonggi-do 443-470 (KR)
(74) Representative: HGF
(86) International application number: PCT/KR2011/001777
(87) International publication number: WO 2011/112064

(56) References cited:
- EP-A2- 2 151 907
- JP-A- 2005 151 609
- JP-A- 2005 287 278
- JP-A- 2006 287 555
- JP-A- 2010 028 916
- KR-A- 20080 106 186
- KR-A- 20090 056 546
- US-A1- 2004 142 733
- US-A1- 2005 194 926
- US-A1- 2007 103 110
- US-A1- 2008 122 401
- US-A1- 2009 251 008
- US-A1- 2009 251 309
- US-B2- 6 437 685

## Description

### Technical Field

The present invention relates to a mobile terminal, and more particularly to a method of receiving wireless charging from another mobile terminal or providing wireless charging to another mobile terminal, and the mobile terminal for the same.

### Background Art

Mobile terminals such as a mobile phone, a PDA (Personal Digital Assistant) and the like are driven with rechargeable batteries due to their nature, and the battery of the mobile terminal is charged through supplied electrical energy by using a separate charging apparatus. In general, a separate contact terminal is arranged outside of the charging apparatus and the battery, and the charging apparatus and the battery are electrically connected to each other through contact between them.

However, since the contact terminal is outwardly protruded in such a contact type charging scheme, the contact terminal is easily contaminated by foreign substances and thus the battery charging is not correctly performed. Further, the battery charging may not be correctly performed also in a case where the contact terminal is exposed to moisture.

Recently, a wireless charging or a non-contact charging technology is developed and used for electronic devices to solve the above-mentioned problems.

Such a wireless charging technology employs wireless power transmission/reception, and corresponds to, for example, a system in which a battery can be automatically charged if the battery is laid on a charging pad without the need to connect the mobile phone to a separate charging connector. The wireless charging technology is generally known to be used for a wireless electric toothbrush or a wireless electric shaver. Accordingly, a waterproof function can be improved since electronic products are wirelessly charged through the wireless charging technology, and the portability of electronic devices can be increased since there is no need to provide a wired charging apparatus. Therefore, technologies related to the wireless charging technology are expected to be significantly developed in the coming age of electric cars.

The wireless charging technology largely includes an electromagnetic induction scheme using a coil, a resonance scheme using a resonance, and an RF/microwave radiation scheme converting electrical energy to a microwave and then transmitting the microwave.

It is considered up to now that the electromagnetic induction scheme is mainstream, but it is expected that the day will come when all electronic products are charged, anytime and anywhere, without a wire in the near future on the strength of recent successful experiments for wirelessly transmitting power to a destination spaced away by dozens of meters through the use of microwaves at home and abroad.

A power transmission method through the electromagnetic induction corresponds to a scheme of transmitting power between a first coil and a second coil. When a magnet approaches the coil, an induced current is generated. A transmission side generates a magnetic field by using the induced current and a reception side generates energy through an induced current according to changes in the magnetic field. The phenomenon is referred to as magnetic induction, and the power transmission method using the magnetic induction has a high energy transmission efficiency.

The power transmission method through electromagnetic induction is most commercialized, and is applied to various devices. The electromagnetic induction scheme makes up a majority of the non-contact charging technology corresponding to the wireless charging in the related art, and this technology is originally applied to products such as an electric shaver, an electric toothbrush or the like using a Nickel battery.

Second, there is a scheme using the resonance. With respect to the resonance scheme, Prof. Soljacic of MIT announced a system in which electricity is wirelessly transferred using a power transmission principle of the resonance scheme based on a coupled mode theory even when a device to be charged is separated from a charging device by several meters. A wireless charging system of an MIT team employs a concept in physics that the resonance is the tendency in which when a tuning fork oscillates at a particular frequency, a wine glass next to the tuning fork will oscillate at the same frequency. The research team resonated an electromagnetic wave containing electrical energy instead of resonating sounds. The resonated electrical energy is directly transferred only when there is a device having a resonance frequency and parts of electrical energy which are not used are reabsorbed into an electromagnetic field instead of being spread in the air, so that it is considered that the electrical energy does not affect surrounding machines or people unlike other electromagnetic waves.

Lastly, there is the RF/micro wave radiation scheme. The RF/micro wave radiation scheme is a new conceptual power transmission method of converting a power energy to a micro wave favorable to wireless transmission and then transmitting the converted energy. The scheme transmits the power energy instead of a concept of a signal used in the wireless communication technology such as a radio, a wireless phone or the like. While normal communication corresponds to carrying a signal on a carrier signal and then transmitting the carrier signal, the wireless power transmission corresponds to transmitting only the carrier.

JP2005151609A discloses a residual capacity detecting section for detecting the remaining capacity of a battery of a portable electronic apparatus. When approach of other portable electronic device is detected, a control section detects the remaining battery capacity of that portable electronic device. Based on the remaining capacity of the battery and the remaining battery capacity of other portable electronic device, the control section controls a switch and a power amplifier to deliver a power discharged from the battery to other portable electronic device via a power coil or charges the battery with a power fed from other portable electronic device via the power coil.

US2008/122401A1 discloses a semiconductor device including a battery that can be wirelessly charged, in which the battery can be charged even when the semiconductor device is not put close to a power feeder.

US2009251008A1 discloses a power exchange device.

US2009251309A1 discloses a wireless communication apparatus including a wireless communication transmitting circuit and a wireless communication receiving circuit that perform communication with another apparatus connected through a wireless communication network.

JP2006287555A discloses a power transfer system comprising a plurality of cellular phones each having a built-in battery, wherein one cellular phone has a feeding means for feeding the power to the other cellular phones and the other cellular phones have a charging means for charging the power fed from the one cellular phone to the battery of the other cellular phones.

US2007/103110A1 discloses an apparatus and method of wirelessly sharing power by an inductive method.

JP2005287278A discloses a method for charging between a mobile phone as an electronic terminal and a personal digital assistant (PDA).

EP2151907A2 discloses a method for resonant power transfer including a step wherein a target electronic device communicates a request for resonant power signal including its identity and its (tuned) resonant frequency information to a power transmitting unit.

JP2010028916A discloses a charging method wherein information on a residual power amount and a reference electric power is exchanged and an allocation electric energy is calculated based thereon.

The wireless charging technology is applied to a wireless electric toothbrush or a wireless shaver. Alternatively, the wireless charging technology is also applied to a charging system in which a mobile phone is automatically recharged without a separate charging connector if the mobile phone is laid on a charging pad. Accordingly, the wireless charging technology is spotlighted since it can wirelessly charge electronic products and thus improve a waterproof function, and it does not require a wired charging device and thus increases the portability of electronic devices.

### Disclosure

### Technical Problem

A wireless charging system to which the wireless charging technology is applied includes a stand board, and the stand board for power supply is configured to supply power to a terminal. Accordingly, there is a disadvantage in which wireless charging is possible only in a place where the stand board for power supplying for supplying power exists.

### Technical solution

Accordingly, the present invention provides a method for wireless charging of a mobile terminal and the mobile terminal for the same.

In accordance with an aspect of the present invention, there is provided a method for wireless charging of a mobile terminal, the method including: the features of claim 1.

In accordance with another aspect of the present invention, there is provided a mobile terminal for wireless charging including the features of claim 7.

### Advantageous Effects

A mobile terminal according to the present invention has an effect of providing wireless charging to another mobile terminal or receiving wireless charging from another mobile terminal.

Further, the present invention allows mobile terminals capable of wirelessly supplying or receiving power to be easily charged when needed by determining a power supplying terminal and a power receiving terminal based on their residual power amounts and accordingly charging power.

Further, there may exist a message exchange process of various scenarios between two electronic devices for wireless charging.

Furthermore, according to the present invention, the mobile terminals can be wirelessly charged without a separate stand board for supplying power, and the mobile terminals can wirelessly supply or receive power according to their power states.

### Brief Description of the Drawings

FIG. 1 is a configuration diagram of a mobile terminal for wireless charging according to an embodiment of the present invention, and
FIG. 2 is a flowchart illustrating a wireless charging operation of a mobile terminal for wireless charging according to an embodiment of the present invention.

### Mode for Carrying Out the Invention

Hereinafter, an apparatus and an operation method included in the present invention will be described with reference to exemplary embodiments of the present invention in conjunction with the accompanying drawings. Specific matters found in the following description, such as a detailed configuration device are provided only to help general understanding of the present invention, and it is apparent to those skilled in the art that various changes and modifications may be made therein without departing from the scope of the invention as defined by the appended claims. Further, in the following description of the present invention, a detailed description of known functions and configurations incorporated herein will be omitted when it may make the subject matter of the present invention rather unclear.

According to the present invention, it is possible to efficiently charge a mobile terminal requiring charging by enabling terminals, which are located in surroundings of the mobile terminal and are capable of wirelessly supplying power, to wirelessly supply power to the mobile terminal according to a request of the mobile terminal after a series of processes.

At this time, a power supplying terminal for providing power serves as a master in wireless charging and a power receiving terminal for receiving power serves as a slave in wireless charging.

According to the present invention, the mobile terminal searches for another neighbor mobile terminal capable of wirelessly supplying power, determines whether the mobile terminal supplies or receives power according to a power state of the mobile terminal and a power state of the found another mobile terminal, and supplies or receives power to or from the corresponding mobile terminal according to the determination.

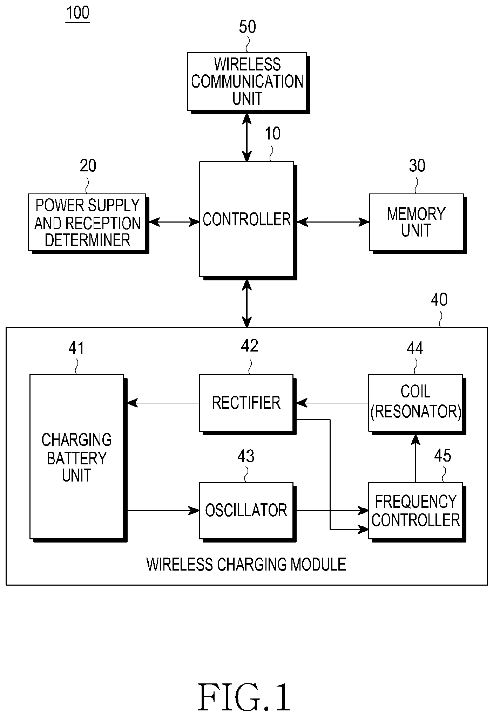

An example of the configuration of the mobile terminal to which the present invention is applied is illustrated in FIG. 1. Although embodiments of the present invention describe the mobile terminal as an example, electronic devices such as a mobile phone, a PDA, a notebook, a personal computer, a portable terminal, and various consumer electronics may be applied.

FIG. 1 is a configuration diagram of a mobile terminal for wireless charging according to an embodiment of the present invention.

A mobile terminal 100 of FIG. 1 can supply or receive wireless charging to or from another mobile terminal.

The mobile terminal 100 of FIG. 1 includes a controller 10, a power supply and reception determiner 20, a memory unit 30, a wireless charging module 40, and a wireless communication unit 50.

The controller 10 controls a general operation of the mobile terminal 100, and controls an operation of each component included in the mobile terminal according to embodiments of the present invention.

Particularly, when mobile terminals are located within a distance in which the mobile terminals can be recharged, the controller 10 exchanges identification information such as an ID for identifying information between the mobile terminals and identifies whether the mobile terminals are mobile terminals which can supply power and can be recharged.

At this time, the controller 10 mutually exchanges the ID and the like through the wireless communication unit 50 and performs a search process of identifying whether the mobile terminal is a mobile terminal having a function of wirelessly supplying or receiving power. At this time, an authentication process of identifying whether a predetermined mobile terminal is a mobile terminal suitable for wireless charging defined by a manufacturer or a standard may be additionally performed even though the mobile terminal can wirelessly supply and receive power. The controller 10 exchanges power state information with the mobile terminal found through the wireless communication unit 50 to determine a power supplying terminal for wirelessly supplying power and a power receiving terminal for wirelessly receiving power in the wireless charging from the mobile terminal 100 and the found mobile terminal.

Such power state information contains information on a residual power amount, a providable power amount, a charging requirement reference value, and a surplus power reference value.

The power state information received from the found mobile terminal is transferred to the power supply and reception determiner 20, and the power supply and reception determiner 20 determines the power supplying terminal and the power receiving terminal based on the power state information. According to various embodiments of the present invention, the power supplying terminal and the power receiving terminal can be determined by a mobile terminal having searched for a neighbor mobile terminal, or determined by a mobile terminal found by another mobile terminal.

Further, the power supply and reception determiner 20 compares a providable power amount of the mobile terminal and a providable power amount of the found mobile terminal to determine a mobile terminal having a larger providable power amount as the power supplying terminal and determine a mobile terminal having a smaller providable power amount as the power receiving terminal.

Moreover, the power supply and reception determiner 20 determines a mobile terminal having a higher power occupancy rate as the power supplying terminal and determines a mobile terminal having a lower power occupancy rate as the power receiving terminal by considering power state information such as the residual power amount, the providable power amount, the charging requirement reference value, and the surplus power reference value of each mobile terminal. At this time, the power occupancy rate refers to correlation between a power amount required by a corresponding mobile terminal to stably operate and a residual power amount or a providable power amount.

In another embodiment of the present invention, a mobile terminal urgently requiring the power reception can receive power regardless of power amounts possessed by mobile terminals by inserting its urgent state in an initial ID exchange.

The power supply and reception determiner 20 determines whether corresponding mobile terminals are the power supply terminals for supplying power or the power receiving terminals for receiving power to perform wireless charging between the mobile terminals.

In other words, the power supply and reception determiner 20 determines whether the mobile terminals are the power supplying terminals or the power receiving terminals and transfers information on the determination to the controller 10, and the controller 10 determines whether to operate the wireless charging module 40 in a power supply mode or a power reception mode based on the information on the determination. In order to determine the mobile terminal for the power supply or the power reception, the power supply and reception determiner 20 performs the determination based on a power amount set in each mobile terminal

Specifically, the power supply and reception determiner 20 determines a mobile terminal having relatively large power amount as the power supplying terminal, and determines a mobile terminal having a relatively small power amount as the power receiving terminal.

Further, when one mobile terminal receives notification information for notifying that a counterpart mobile terminal is a mobile terminal urgently requiring the power supply from the counterpart mobile terminal, the power supply and reception determiner 20 may determine that the counterpart mobile terminal as the power reception terminal regardless of the power amount.

The power supply and reception determiner 20 may be included in the controller 10 according to embodiments of the present invention or the search process and the authentication process of the controller 10 may be performed by the power supply and reception determiner 20.

The memory unit 30 stores a program for a processing and a control by the controller 10, reference data, renewable various storage data, data received from the outside, data generated according to a user's input and the like, and is provided as a working memory of the controller 12. Further, the memory unit 13 stores power information of the mobile terminal 100 according to the present invention. According to an embodiment of the present invention, the power information contains the charging requirement reference value, the surplus power reference value, and the residual power amount. The residual power amount refers to the remaining power amount of the mobile terminal 100 which is checked in real time or periodically. The charging requirement reference value is a power value which is a reference for determining whether the charging is required, and the surplus power reference value is a power value which is a reference for determining whether the mobile terminal can supply power to another mobile terminal. The charging requirement reference value and the surplus power reference value may be different for each mobile terminal.

The wireless communication unit 50 is a communication unit for transmitting and receiving various information and messages required in a wireless charging process through near field communication under a control of the controller 10, and may include, for example, a Bluetooth module, an RFID communication apparatus and the like. In an embodiment of the present invention, it may be assumed that the wireless communication unit 50 is the RFID communication apparatus, and accordingly the wireless communication unit 50 may include an RFID reader and an RFID tag.

The wireless charging module 40 is a module for wirelessly supplying or receiving power, and may be configured by, for example, one of an electromagnetic induction scheme, a resonance scheme, and an RF/microwave radiation scheme or configured according to another wireless power providing scheme.

It is assumed that the wireless charging module 40 is configured according to the resonance scheme in an embodiment of the present invention. Accordingly, the wireless charging module 40 includes a charging battery unit 41, a rectifier 42, an oscillator 43, a coil (resonator) 44, and a frequency controller 45.

The charging battery unit 41 is a battery storing wirelessly supplied power, and the power stored in the charging battery unit 41 may be provided to another mobile terminal through the oscillator 43.
In other words, the power stored in the charging battery unit 41 is converted to oscillate at a preset oscillation frequency by the oscillator 43, and the converted power is wirelessly provided to another mobile terminal through an antenna having the same resonance frequency as the oscillation frequency, that is, the coil (resonator) 44. The oscillation frequency may be, for example, an RFID frequency of 13.56 MHz. Since an optimal resonance frequency may vary depending on an external condition, the frequency converter 45 converts the resonance frequency of the coil (resonator) 44 in order to increase the efficiency according to a control of the controller 10. Further, the coil (resonator) 44 can receive power wirelessly provided from another mobile terminal, and the received power is stored in the charging battery unit 41 through the rectifier 42.

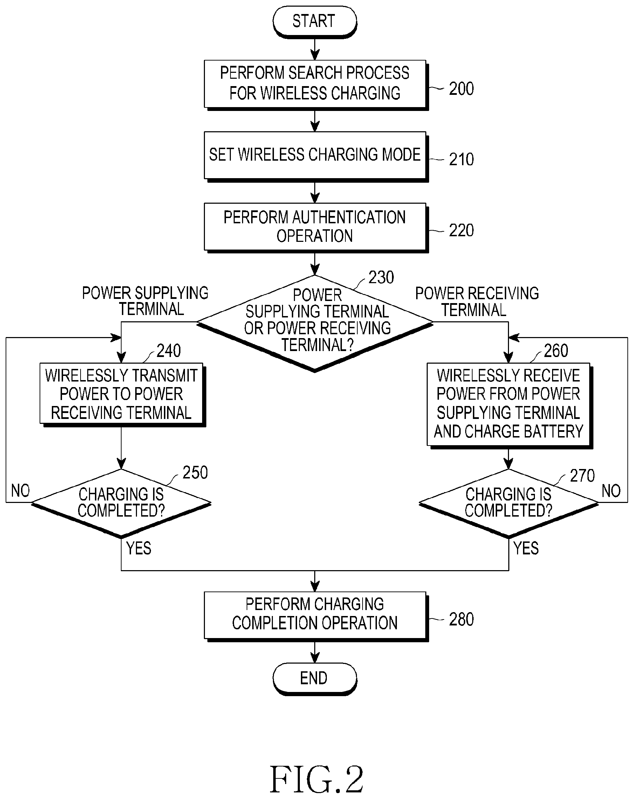

FIG. 2 is a flowchart illustrating a wireless charging operation of the mobile terminal for wireless charging according to an embodiment of the present invention.

The embodiment of the present invention will be described with a first terminal and a second terminal adjacent to the first terminal as an example.

Referring to FIG. 2, the controller 10 performs a search operation for wireless charging in step 200. Specifically, the controller 10 broadcasts a search request message to a second terminal located in the surroundings through the wireless communication unit 50. At this time, the search request message contains an identification ID of a first terminal. The identification ID refers to an identifier of a mobile terminal indicating that the mobile terminal is a mobile terminal to which power can be wirelessly charged and which can wirelessly provide power. Further, the search request message can be transmitted when it is determined that power reception is required or power supply to another mobile terminal is required.

When receiving a search request response message containing its own identification ID from the second terminal, the controller 10 sets a wireless charging mode in step 210.

Specifically, the controller 10 transmits a mode switching request message to the second terminal, and the mode switching request message contains setting parameters which are set to the wireless charging model 40 between the two devices in order to wirelessly transmit and receive power. In an embodiment of the present invention, the setting parameters includes a frequency and may include a charging band, and the like as the wireless charging module 40 is implemented in the resonance scheme. The setting parameters are set to the wireless charging module 40 when actual wireless charging is determined in the future.

When a mode switching request response message is received from the second terminal, the controller 10 performs an authentication operation between the first terminal and the second terminal in step 220.

That is, when receiving the mode switching request response message, the controller 10 transmits an authentication request message containing authentication information to the second terminal. When the authentication is completed through an authentication process using the authentication information contained in the authentication request message, the second terminal transmits an authentication request response message to the first terminal and terminates an authentication procedure.

The embodiment of the present invention has been configured with the simplest procedures, and an additional process may be required according to a security level. For example, the first terminal may be configured to perform the authentication process by including the authentication information of the second terminal in the authentication request response message.

After the completion of the authentication procedure, the controller 10 determines whether the first terminal and the second terminal are a power supplying terminal or a power receiving terminal in step 230. When the first terminal is the power supplying terminal and the second terminal is the power receiving terminal, step 240 is performed. When the first terminal is the power receiving terminal and the second terminal is the power supplying terminal, step 250 is performed.

Specifically, when the controller 10 receives a state information message containing power state information associated with a power state of the second terminal from the second terminal, the controller 10 determines the power supplying terminal and the power receiving terminal from the first terminal and the second terminal based on a residual power amount, and a surplus power reference value, and a charging requirement reference value of the first terminal, and information contained in the received state information message. The power state information contains the residual power amount, the charging requirement reference value, and the surplus power reference value of the first terminal, and may further contain a required power amount, a providable power amount and the like.

In other words, the controller 10 compares a providable power amount of each terminal to determine a terminal having a larger providable power amount as a power supplying apparatus and determine a terminal having a smaller providable power amount as a power receiving apparatus. Further, the controller 10 calculates and determines the providable power amount of the terminal determined as the power supplying apparatus, and then transmits a power information identification message containing contents of the determination.

The determination of the power supplying apparatus and the power receiving apparatus, and the determination of the providable power amount may be configured to be determined by the second terminal. In this case, the second terminal transmits a power state information message to the first terminal and makes a request for the power state information from the first terminal, and the first terminal inserts its own power state information in a state information response message and transmits the state information response message, so that the second terminal determines the power supplying apparatus, the power receiving apparatus, the providable power amount and the like based on the collected information. Then, determined contents are notified to the first terminal.

When the residual power amount of the first terminal is larger than the surplus power reference value of the second terminal, the controller 10 determines the first terminal as the power supplying terminal.

The controller 10 having proceeded to step 240 from step 230 transmits its own power to the second terminal which is the power receiving terminal.

That is, each of the two terminals sets its own wireless charging module 40 by using the transmitted setting parameter, and one of the two mobile terminals transmits a charging start message. Further, in a process of wirelessly transmitting and receiving power, one terminal transmits a charging information message for guiding a power provision progress matter, and a mobile terminal having received the charging information message transmits a charging information identification message in response to the charging information message. The charging information message and the charging information identification message may be used for purposes of informing the user of total charging information, and helps a determination on whether power transmission is stopped when the power transmission is unexpectedly stopped.

Accordingly, when the charging start message is received from the second terminal, the controller 10 wirelessly provides power to the second terminal. When the charging information message containing charging information such as the power amount and the like provided from the second terminal, the controller 20 transmits a response message to the second terminal and repeats to transmit and receive such messages until the charging is completed.

The controller 10 determines whether the charging is completed in step 250, and proceeds to step 280 when the charging is completed. Otherwise, the controller 10 proceeds to step 240 and continuously transmits power to the second terminal which is the power receiving terminal.

The controller 10 having proceeded to step 260 from step 230 receives power from the second terminal corresponding to the power supplying terminal to charge a battery.

Specifically, the controller 10 transmits the charging start message to the second terminal and receives power from the coil (resonator) 44, and AC power is converted to DC power through the rectifier 42 and then charged in the charging battery 41.

The controller 10 determines whether the charging is completed in step 270, and proceeds to step 280 when the charging is completed. Otherwise, the controller 10 proceeds to step 260, and wirelessly receives power continuously from the second terminal which is the power supplying terminal to charge the battery.

When the charging is completed, the controller 10 performs a charging completion operation in step 280. That is, when the first terminal is the power supplying terminal, the controller 10 transmits a power transmission completion message to the second terminal after transmitting an initially determined power supply amount. Further, in a case where the first terminal is the power receiving terminal, if the power transmission completion message is received from the second terminal, the controller 10 transmits a power transmission completion identification message containing a final power reception report to the second terminal. For example, the rectifier 42 further includes a circuit structure such as a load modulation and changes an impedance in a charging power state according to a predetermined rule when the charging is completed, and thus a signal for the changed impedance may be transmitted to the power supplying apparatus.

As described above, the present invention allows the mobile terminals which can wirelessly supply or receive power to be easily charged as necessary by determining the power supplying apparatus and the power receiving apparatus based on their residual power amounts and accordingly performing power charging. Further, there may need a message exchange process of various scenarios between two mobile terminals for the wireless charging.

According to the present invention, it is possible to perform wireless charging between mobile terminals without a separate stand board and to wirelessly supply or receive power according to a power state of the mobile terminal.

A configuration and an operation of the apparatus and the method for wirelessly charging the mobile terminal according to an embodiment of the present invention may be implemented as described above. While the exemplary embodiments of the present invention have been described, various modifications may be made thereto without departing the scope of the present invention.

## Claims

1. A method for wireless charging of a mobile terminal (100), the method comprising:
searching (200) for one or more rechargeable mobile terminals by broadcasting a search request message containing identification information of the mobile terminal to the one or more rechargeable mobile terminals, wherein the identification information refers to an identifier of the mobile terminal indicating that the mobile terminal is a mobile terminal to which power can be wirelessly charged and which can wirelessly provide power;
setting (210), when receiving a search request response message containing its own identification information from the one or more mobile terminals, a wireless charging mode by transmitting a mode switching request message including setting parameters to the one or more rechargeable mobile terminals, the setting parameters including a frequency required for wirelessly transmitting or receiving power;
receiving a mode switching request response message from the one or more rechargeable mobile terminals and performing (220) an authentication operation,
obtaining power state information from the one or more rechargeable mobile terminals;
determining (230) the mobile terminal (100) as one of a power supplying terminal or a power receiving terminal based on the power state information; and
performing (240, 260) an operation for power charging using the setting parameters according to the determination.

2. The method as claimed in claim 1, wherein performing the operation for the power charging according to the determination comprises supplying (240) power to the one or more rechargeable mobile terminals when the mobile terminal (100) is determined as the power supplying terminal.

3. The method as claimed in claim 1, wherein performing the operation for the power charging according to the determination comprises receiving (260) power from the one or more rechargeable mobile terminals when the mobile terminal (100) is determined as the power receiving terminal.

4. The method as claimed in claim 1, wherein the power state information received from the one or more rechargeable mobile terminals contains information on a residual power amount indicating a currently remaining power amount, a charging requirement reference value corresponding to a power value which is a reference for determining whether charging is required, and a surplus power reference value corresponding to a power value which is a reference for determining whether the mobile terminal can supply power to another mobile terminal.

5. The method as claimed in claim 4, wherein determining (230) the mobile terminal (100) as one of the power supplying terminal or the power receiving terminal based on the received power state information comprises:
determining the mobile terminal (100) as the power supplying terminal when a providable power amount of the mobile terminal (100) calculated based on power state information of the mobile terminal (100) is larger than providable power amounts of the one or more rechargeable mobile terminals calculated based on the received power state information; and
determining the mobile terminal (100) as the power receiving terminal when the providable power amount of the mobile terminal (100) is smaller than the providable power amounts of the one or more rechargeable mobile terminals.

6. The method as claimed in claim 4, wherein determining (230) the mobile terminal (100) as one of the power supplying terminal or the power receiving terminal based on the received power state information further comprises:
receiving notification information for notifying that a mobile terminal among the one or more rechargeable mobile terminals is a mobile terminal urgently requiring a power supply; and
determining the mobile terminal urgently requiring a power supply as the power receiving terminal regardless of power amounts possessed by the mobile terminals.

7. A mobile terminal (100) for wireless charging comprising:
a wireless communication unit (50);
a wireless charging module (40) arranged to wirelessly transmitting and receiving power; and
a controller (10) configured to:
search (200) for one or more rechargeable mobile terminals through the wireless communication module by broadcasting a search request message containing identification information of the mobile terminal to the one or more rechargeable mobile terminals, wherein the identification information refers to an identifier of the mobile terminal indicating that the mobile terminal is a mobile terminal to which power can be wirelessly charged and which can wirelessly provide power;
set (210), when receiving a search request response message containing its own identification information from the one or more mobile terminals, a wireless charging mode by transmitting a mode switching request message including setting parameters to the one or more rechargeable mobile terminals, the setting parameters including a frequency required for wirelessly transmitting or receiving power through the wireless communication module (50);
receive a mode switching request response message from the one or more rechargeable mobile terminals and perform (220) an authentication operation,
obtain power state information from the one or more rechargeable mobile terminals;
determine (230) the mobile terminal (100) as one of a power supplying terminal or a power receiving terminal based on the power state information; and
control the wireless charging module (40) to perform (240, 260) an operation for power charging using the setting parameters according to the determination.

8. The mobile terminal (100) as claimed in claim 7, wherein the controller (10) is configured to control the wireless charging module (40) to supply (240) power to the one or more rechargeable mobile terminals when the mobile terminal (100) is determined as the power supplying terminal.

9. The mobile terminal (100) as claimed in claim 7, wherein the controller (10) is configured to control the wireless charging module (40) to receive (260) power from the one or more rechargeable mobile terminals when the mobile terminal (100) is determined as the power receiving terminal.

10. The mobile terminal (100) as claimed in claim 7, wherein the power state information received from the one or more rechargeable mobile terminals contains information on a residual power amount indicating a currently remaining power amount, a charging requirement reference value corresponding to a power value which is a reference for determining whether charging is required, and a surplus power reference value corresponding to a power value which is a reference for determining whether the mobile terminal can supply power to another mobile terminal.

11. The mobile terminal (100) as claimed in claim 10, wherein the controller (10) is configured to:
determine the mobile terminal (100) as the power supplying terminal when a providable power amount of the mobile terminal calculated based on power state information of the mobile terminal (100) is larger than providable power amounts of the one or more rechargeable mobile terminals calculated based on the received power state information; and
determine the mobile terminal (100) as the power receiving terminal when the providable power amount of the mobile terminal (100) is smaller than the providable power amounts of the one or more rechargeable mobile terminals.

12. The mobile terminal (100) as claimed in claim 10, wherein the controller (10) is configured to receive notification information for notifying that a mobile terminal among the one or more rechargeable mobile terminals is a mobile terminal urgently requiring a power supply and determining the mobile terminal urgently requiring a power supply as the power receiving terminal regardless of power amounts possessed by the mobile terminals

## Patentansprüche

1. Verfahren zum drahtlosen Aufladen eines mobilen Endgeräts (100), das Verfahren umfassend:
Suchen (200) nach einem oder mehreren wiederaufladbaren mobilen Endgeräten durch Aussenden einer Suchanforderungsnachricht, die Identifizierungsinformationen des mobilen Endgeräts enthält, an das eine oder die mehreren wiederaufladbaren mobilen Endgeräte, wobei sich die Identifizierungsinformationen auf eine Kennung des mobilen Endgeräts bezieht, die angibt, dass das mobile Endgerät ein mobiles Endgerät ist, das drahtlos mit Strom geladen werden kann und das drahtlos Strom bereitstellen kann;
Einstellen (210), bei Empfangen einer Suchanforderung-Antwortnachricht, die ihre eigenen Identifizierungsinformationen enthält, von dem einen oder den mehreren mobilen Endgeräten, eines drahtlosen Lademodus durch Senden einer Modusumschalt-Anforderungsnachricht, die Einstellparameter beinhaltet, an das eine oder die mehreren wiederaufladbaren mobilen Endgeräte, wobei die Einstellparameter eine Frequenz beinhalten, die für ein drahtloses Übertragen oder Erhalten von Strom erforderlich ist;
Empfangen einer Modusumschaltanforderung-Antwortnachricht von dem einen oder den mehreren wiederaufladbaren mobilen Endgeräten und Ausführen (220) eines Authentifizierungsvorgangs,
Erlangen von Stromzustandsinformationen von dem einen oder den mehreren wiederaufladbaren mobilen Endgeräten;
Bestimmen (230) des mobilen Endgeräts (100) als eines von einem stromzuführenden Endgerät oder einem stromerhaltenden Endgerät basierend auf den Stromzustandsinformationen; und
Ausführen (240, 260) eines Vorgangs zum Stromaufladen unter Verwendung der Einstellparameter gemäß der Bestimmung.

2. Verfahren nach Anspruch 1, wobei ein Ausführen des Vorgangs für das Stromaufladen gemäß der Bestimmung ein Zuführen (240) von Strom zu dem einen oder den mehreren wiederaufladbaren mobilen Endgeräten umfasst, wenn das mobile Endgerät (100) als das stromzuführende Endgerät bestimmt wird.

3. Verfahren nach Anspruch 1, wobei ein Ausführen des Vorgangs für das Stromaufladen gemäß der Bestimmung ein Erhalten (260) von Strom von dem einen oder den mehreren wiederaufladbaren mobilen Endgeräten umfasst, wenn das mobile Endgerät (100) als das stromerhaltende Endgerät bestimmt wird.

4. Verfahren nach Anspruch 1, wobei die von dem einen oder den mehreren wiederaufladbaren mobilen Endgeräten empfangenen Stromzustandsinformationen Informationen über eine Reststrommenge, die eine gegenwärtig verbleibende Strommenge angibt, einen Ladungsanforderung-Referenzwert, der einem Stromwert entspricht, der eine Referenz für ein Bestimmen ist, ob ein Laden erforderlich ist, und einen Überschussstrom-Referenzwert, der einem Stromwert entspricht, der eine Referenz für ein Bestimmen ist, ob das mobile Endgerät Strom zu einem anderen mobilen Endgerät zuführen kann, enthalten.

5. Verfahren nach Anspruch 4, wobei ein Bestimmen (230) des mobilen Endgeräts (100) als eines von dem stromzuführenden Endgerät oder dem stromerhaltenden Endgerät basierend auf den empfangenen Stromzustandsinformationen Folgendes umfasst:
Bestimmen des mobilen Endgeräts (100) als das stromzuführende Endgerät, wenn eine bereitstellbare Strommenge des mobilen Endgeräts (100), die basierend auf Stromzustandsinformationen des mobilen Endgeräts (100) berechnet wird, größer ist als bereitstellbare Strommengen des einen oder der mehreren wiederaufladbaren mobilen Endgeräte, die basierend auf den empfangenen Stromzustandsinformationen berechnet werden; und
Bestimmen des mobilen Endgeräts (100) als das stromerhaltende Endgerät, wenn die bereitstellbare Strommenge des mobilen Endgeräts (100) kleiner ist als die bereitstellbaren Strommengen des einen oder der mehreren wiederaufladbaren mobilen Endgeräte.

6. Verfahren nach Anspruch 4, wobei ein Bestimmen (230) des mobilen Endgeräts (100) als eines von dem stromzuführenden Endgerät oder dem stromerhaltenden Endgerät basierend auf den empfangenen Stromzustandsinformationen ferner Folgendes umfasst:
Empfangen von Benachrichtigungsinformationen zum Benachrichtigen, dass ein mobiles Endgerät unter dem einen oder den mehreren aufladbaren mobilen Endgeräten ein mobiles Endgerät ist, das dringend eine Stromzuführung erfordert; und
Bestimmen des mobilen Endgeräts, das dringend eine Stromzuführung als das Stromempfangende Endgerät erfordert, unabhängig von den Strommengen, die von den mobilen Endgeräten besessen werden.

7. Mobiles Endgerät (100) zum drahtlosen Aufladen, umfassend:
eine drahtlose Kommunikationseinheit (50);
ein drahtloses Lademodul (40), das angeordnet ist, um Strom drahtlos zu übertragen und zu erhalten; und
eine Steuerung (10), die zu Folgendem konfiguriert ist:
Suchen (200) nach einem oder mehreren wiederaufladbaren mobilen Endgeräten über das drahtlose Kommunikationsmodul durch Aussenden einer Suchanforderungsnachricht, die Identifizierungsinformationen des mobilen Endgeräts enthält, an das eine oder die mehreren wiederaufladbaren mobilen Endgeräte, wobei sich die Identifizierungsinformationen auf eine Kennung des mobilen Endgeräts bezieht, die angibt, dass das mobile Endgerät ein mobiles Endgerät ist, das drahtlos mit Strom geladen werden kann und das drahtlos Strom bereitstellen kann;
Einstellen (210), bei Empfangen einer Suchanforderung-Antwortnachricht, die ihre eigenen Identifizierungsinformationen enthält, von dem einen oder den mehreren mobilen Endgeräten, eines drahtlosen Lademodus durch Senden einer Modusumschalt-Anforderungsnachricht, die Einstellparameter beinhaltet, an das eine oder die mehreren wiederaufladbaren mobilen Endgeräte, wobei die Einstellparameter eine Frequenz beinhalten, die für ein drahtloses Übertragen oder Erhalten von Strom über das drahtlose Kommunikationsmodul (50) erforderlich ist;
Empfangen einer Modusumschaltanforderung-Antwortnachricht von dem einen oder den mehreren wiederaufladbaren mobilen Endgeräten und Ausführen (220) eines Authentifizierungsvorgangs,
Erlangen von Stromzustandsinformationen von dem einen oder den mehreren wiederaufladbaren mobilen Endgeräten;
Bestimmen (230) des mobilen Endgeräts (100) als eines von einem stromzuführenden Endgerät oder einem stromerhaltenden Endgerät basierend auf den Stromzustandsinformationen; und
Steuern des drahtloses Lademoduls (40), um einen Vorgang zum Stromaufladen unter Verwendung der Einstellparameter gemäß der Bestimmung auszuführen (240, 260).

8. Mobiles Endgerät (100) nach Anspruch 7, wobei die Steuerung (10) konfiguriert ist, um das drahtlose Lademodul (40) zu steuern, um zu dem einen oder den mehreren wiederaufladbaren mobilen Endgeräten Strom zuzuführen (240), wenn das mobile Endgerät (100) als das stromzuführende Endgerät bestimmt wird.

9. Mobiles Endgerät (100) nach Anspruch 7, wobei die Steuerung (10) konfiguriert ist, um das drahtlose Lademodul (40) zu steuern, um Strom von dem einen oder den mehreren wiederaufladbaren mobilen Endgeräten zu erhalten (260), wenn das mobile Endgerät (100) als das stromerhaltende Endgerät bestimmt wird.

10. Mobiles Endgerät (100) nach Anspruch 7, wobei die von dem einen oder den mehreren wiederaufladbaren mobilen Endgeräten empfangenen Stromzustandsinformationen Informationen über eine Reststrommenge, die eine gegenwärtig verbleibende Strommenge angibt, einen Ladungsanforderung-Referenzwert, der einem Stromwert entspricht, der eine Referenz für ein Bestimmen ist, ob ein Laden erforderlich ist, und einen Überschussstrom-Referenzwert, der einem Stromwert entspricht, der eine Referenz für ein Bestimmen ist, ob das mobile Endgerät Strom zu einem anderen mobilen Endgerät zuführen kann, enthalten.

11. Mobiles Endgerät (100) nach Anspruch 10, wobei die Steuerung (10) zu Folgendem konfiguriert ist:
Bestimmen des mobilen Endgeräts (100) als das stromzuführende Endgerät, wenn eine bereitstellbare Strommenge des mobilen Endgeräts, die basierend auf Stromzustandsinformationen des mobilen Endgeräts (100) berechnet wird, größer ist als bereitstellbare Strommengen des einen oder der mehreren wiederaufladbaren mobilen Endgeräte, die basierend auf den empfangenen Stromzustandsinformationen berechnet werden; und
Bestimmen des mobilen Endgeräts (100) als das stromerhaltende Endgerät, wenn die bereitstellbare Strommenge des mobilen Endgeräts (100) kleiner ist als die bereitstellbaren Strommengen des einen oder der mehreren wiederaufladbaren mobilen Endgeräte.

12. Mobiles Endgerät (100) nach Anspruch 10, wobei die Steuerung (10) konfiguriert ist, um Benachrichtigungsinformationen zu empfangen, um zu benachrichtigen, dass ein mobiles Endgerät unter dem einen oder den mehreren wiederaufladbaren mobilen Endgeräten ein mobiles Endgerät ist, das dringend eine Stromzuführung erfordert, und um das mobile Endgerät, das dringend eine Stromversorgung erfordert, als das stromempfangende Endgerät zu bestimmen, unabhängig von den Strommengen, die von den mobilen Endgeräten besessen werden.

## Revendications

1. Procédé de chargement sans fil d'un terminal mobile (100), le procédé comprenant :
la recherche (200) d'un ou plusieurs terminaux mobiles rechargeables en diffusant un message de demande de recherche contenant des informations d'identification du terminal mobile vers le ou les terminaux mobiles rechargeables, lesdites informations d'identification faisant référence à un identifiant du terminal mobile indiquant que le terminal mobile est un terminal mobile dont l'énergie peut être chargée sans fil et qui peut fournir de l'énergie sans fil ;
le réglage (210), lors de la réception d'un message de réponse à une demande de recherche contenant ses propres informations d'identification en provenance du ou des terminaux mobiles, un mode de chargement sans fil en émettant un message de demande de changement de mode comprenant des paramètres de réglage au ou aux terminaux mobiles rechargeables, les paramètres de réglage comprenant une fréquence requise pour l'émission ou la réception d'énergie sans fil ;
la réception d'un message de réponse à une demande de changement de mode en provenance du ou des terminaux mobiles rechargeables et la réalisation (220) d'une opération d'authentification, l'obtention des informations d'état de d'énergie à partir du ou des terminaux mobiles rechargeables ; la détermination (230) du terminal mobile (100) en tant qu'un parmi un terminal d'alimentation en énergie ou un terminal de réception d'énergie sur la base des informations d'état d'énergie ; et
la réalisation (240, 260) d'une opération permettant le chargement d'énergie à l'aide des paramètres de réglage selon la détermination.

2. Procédé selon la revendication 1, ladite réalisation de l'opération permettant le chargement d'énergie selon la détermination comprenant l'alimentation (240) en énergie du ou des terminaux mobiles rechargeables lorsque le terminal mobile (100) est déterminé en tant que terminal d'alimentation.

3. Procédé selon la revendication 1, ladite réalisation de l'opération permettant le chargement de l'énergie selon la détermination comprenant la réception (260) d'énergie en provenance du ou des terminaux mobiles rechargeables lorsque le terminal mobile (100) est déterminé en tant que terminal de réception d'énergie.

4. Procédé selon la revendication 1, lesdites informations d'état d'énergie reçues en provenance du ou des terminaux mobiles rechargeables contenant des informations sur une quantité d'énergie résiduelle indiquant une quantité d'énergie actuellement restante, une valeur de référence d'exigence de chargement correspondant à une valeur d'énergie qui est une référence pour déterminer si un chargement est nécessaire, et une valeur de référence d'énergie excédentaire correspondant à une valeur d'énergie qui est une référence pour déterminer si le terminal mobile peut alimenter en énergie un autre terminal mobile.

5. Procédé selon la revendication 4, ladite détermination (230) du terminal mobile (100) en tant qu'un parmi le terminal d'alimentation en énergie ou le terminal de réception d'énergie sur la base des informations d'état d'énergie reçues comprenant :
la détermination du terminal mobile (100) en tant que terminal d'alimentation lorsqu'une quantité d'énergie disponible du terminal mobile (100) calculée sur la base des informations d'état d'énergie du terminal mobile (100) est supérieure aux quantités d'énergie disponibles du ou des terminaux mobiles rechargeables calculées sur la base des informations d'état d'énergie reçues ; et
la détermination du terminal mobile (100) en tant que terminal de réception d'énergie lorsque la quantité d'énergie disponibles du terminal mobile (100) est inférieure aux quantités d'énergie disponibles du ou des terminaux mobiles rechargeables.

6. Procédé selon la revendication 4, ladite détermination (230) du terminal mobile (100) en tant qu'un parmi le terminal d'alimentation en énergie ou le terminal de réception d'énergie sur la base des informations d'état d'énergie reçues comprenant en outre :
la réception des informations de notification destinées à notifier qu'un terminal mobile parmi le ou les terminaux mobiles rechargeables est un terminal mobile nécessitant de toute urgence une alimentation en énergie ; et
la détermination du terminal mobile nécessitant de toute urgence une alimentation en énergie en tant que terminal de réception d'énergie indépendamment des quantités d'énergie possédées par les terminaux mobiles.

7. Terminal mobile (100) destiné au chargement sans fil comprenant : une unité de communication sans fil (50) ;
un module de chargement sans fil (40) agencé pour émettre et recevoir de l'énergie sans fil ; et
un dispositif de commande (10) conçu pour :
rechercher (200) un ou plusieurs terminaux mobiles rechargeables par l'intermédiaire du module de communication sans fil en diffusant un message de demande de recherche contenant des informations d'identification du terminal mobile vers le ou les terminaux mobiles rechargeables, lesdites informations d'identification faisant référence à un identifiant du terminal mobile indiquant que le terminal mobile est un terminal mobile dont l'énergie peut être chargée sans fil et qui peut fournir de l'énergie sans fil ;
régler (210), lors de la réception d'un message de réponse à une demande de recherche contenant ses propres informations d'identification en provenance du ou des terminaux mobiles, un mode de chargement sans fil en émettant un message de demande de changement de mode comprenant des paramètres de réglage au ou aux terminaux mobiles rechargeables, les paramètres de réglage comprenant une fréquence requise pour émettre ou recevoir de l'énergie sans fil par l'intermédiaire du module de communication sans fil (50) ;
recevoir un message de réponse à la demande de changement de mode en provenance du ou des terminaux mobiles rechargeables et réaliser (220) une opération d'authentification, obtenir des informations d'état d'énergie du ou des terminaux mobiles rechargeables ;
déterminer (230) le terminal mobile (100) en tant qu'un parmi un terminal d'alimentation en énergie ou un terminal de réception d'énergie sur la base des informations d'état d'énergie ; et
commander le module de chargement sans fil (40) pour réaliser (240, 260) une opération de chargement d'énergie à l'aide des paramètres de réglage selon la détermination.

8. Terminal mobile (100) selon la revendication 7, ledit dispositif de commande (10) étant conçu pour commander le module de chargement sans fil (40) pour alimenter (240) en énergie le ou les terminaux mobiles rechargeables lorsque le terminal mobile (100) est déterminé en tant que terminal d'alimentation en énergie.

9. Terminal mobile (100) selon la revendication 7, ledit dispositif de commande (10) étant conçu pour commander le module de chargement sans fil (40) afin de recevoir (260) de l'énergie en provenance du ou des terminaux mobiles rechargeables lorsque le terminal mobile (100) est déterminé en tant que terminal de réception d'énergie.

10. Terminal mobile (100) selon la revendication 7, lesdites informations d'état d'énergie reçues en provenance du ou des terminaux mobiles rechargeables contenant des informations sur une quantité d'énergie résiduelle indiquant une quantité d'énergie actuellement restante, une valeur de référence d'exigence de chargement correspondant à une valeur d'énergie qui est une référence pour déterminer si un chargement est nécessaire, et une valeur de référence d'énergie excédentaire correspondant à une valeur d'énergie qui est une référence pour déterminer si le terminal mobile peut alimenter en énergie un autre terminal mobile.

11. Terminal mobile (100) selon la revendication 10, ledit dispositif de commande (10) étant conçu pour :
déterminer le terminal mobile (100) en tant que terminal d'alimentation en énergie lorsqu'une quantité d'énergie disponible du terminal mobile calculée sur la base des informations d'état d'énergie du terminal mobile (100) est supérieure aux quantités d'énergie disponibles du ou des terminaux mobiles rechargeables calculées sur la base sur les informations d'état d'énergie reçues ; et
déterminer le terminal mobile (100) en tant que terminal de réception d'énergie lorsque la quantité d'énergie disponible du terminal mobile (100) est inférieure aux quantités d'énergie disponibles du ou des terminaux mobiles rechargeables.

12. Terminal mobile (100) selon la revendication 10, ledit dispositif de commande (10) étant conçu pour recevoir des informations de notification destinées à notifier qu'un terminal mobile parmi le ou les terminaux mobiles rechargeables est un terminal mobile nécessitant de toute urgence une alimentation en énergie et déterminant le terminal mobile nécessitant de toute urgence une alimentation en énergie en tant que terminal de réception d'énergie indépendamment des quantités d'énergie possédées par les terminaux mobiles.
